Europäisches Patentamt

European Patent Office

Office européen des brevets

(19)

(11) Numéro de publication: **0 270 870**
**B1**

(12) **FASCICULE DE BREVET EUROPEEN**

(45) Date de publication du fascicule du brevet: **23.01.91**

(51) Int. Cl.⁵: **C 21 B 7/18,** B 65 D 90/66

(21) Numéro de dépôt: **87116769.8**

(22) Date de dépôt: **13.11.87**

(54) **Mécanisme pour actionner un clapet de dosage.**

(30) Priorité: **21.11.86 LU 86680**

(43) Date de publication de la demande:
**15.06.88 Bulletin 88/24**

(45) Mention de la délivrance du brevet:
**23.01.91 Bulletin 91/04**

(84) Etats contractants désignés:
**AT BE DE ES FR GB IT NL SE**

(56) Documents cités:
**EP-A-0 134 918**
**GB-A-1 120 278**
**US-A-2 200 488**

**PATENT ABSTRACTS OF JAPAN, vol. 9, no. 211
(C-300)1934r, 29 aou7t 1985; & JP-A-60 77 909
(SHIN NIPPON SEITETSU K.K.) 02-05-1985**

(73) Titulaire: **PAUL WURTH S.A.**
**32 rue d'Alsace**
**L-1122 Luxembourg (LU)**

(72) Inventeur: **Legille, Edouard**
**165 rue de Trèves**
**L-Luxembourg (LU)**
Inventeur: **Lonardi, Emile**
**30 rue de Schouweiler**
**L-Bascharage (LU)**

(74) Mandataire: **Meyers, Ernest et al**
**Office de Brevets FREYLINGER & ASSOCIES B.P.
1 321, route d'Arlon
L-8001 Strassen (LU)**

Courier Press, Leamington Spa, England.

EP 0 270 870 B1

**Description**

La présente invention concerne un dispositif de réglage de l'ouverture d'écoulement d'une tubulure verticale, comprenant un clapet de dosage constitué de deux registres rotatifs en forme de calotte sphérique ou cylindrique pourvus de découpes symétriques par rapport à l'axe d'une ouverture centrale définie par le mouvement des registres et de leur découpes, ces registres étant solidaires de deux arbres d'entraînement disposés l'un coaxialement par rapport à l'autre et logés dans les paliers de la tubulure et un mécanisme pour actionner, par pivotement autour de leur axe commun, chacun des registres en synchronisme et en sens opposé, et comprenant deux bras respectivement solidaires de chacun des deux arbres et articulé, chacun, par l'intermédiare d'une bielle, sur un levier culbuteur, monté sur un axe de pivotement parallèle à l'axe commun des deux arbres, ces leviers culbuteurs étant reliés à un dispositif d'entraînement pour les faire pivoter autour de leur axe de pivotement et dans lequel l'articulation entre l'un des leviers culbuteur et sa bielle est décalé angulairement autour dudit axe pivotement par rapport à l'articulation entre l'autre levier culbuteur et sa bielle.

Un dispositif de ce genre est décrit dans le brevet européen no. 0 134 918 pour régler l'écoulement de la matière de chargement hors d'une enceinte de stockage disposée sur l'axe central d'une installation de chargement d'un four à cuve. Ce document préconise une commande des registres de manière que l'ouverture d'écoulement délimitée par ceux-si soit modifiée symétriquement par rapport à l'axe central.

La mise en oeuvre de ce système de dosage a montré une certaine irrégularité du niveau à la surface de chargement du four. Cette irrégularité a d'ailleurs été confirmée par des essais qui, en outre, ont montré que ces irrégularités proviennent d'un désaxement, par rapport à l'axe vertical du courant de la matière de chargement s'écoulant à travers une ouverture symétrique définie entre les deux registres. Certes, ce désaxement est très faible et son effet sur le profil de chargement est variable suivant la position angulaire de la goulotte. Par contre, étant donné que les mêmes effets se produisent toujours dans les mêmes positions angulaires (vues en plan) de la goulotte, l'accumulation ce ces irrégularités au fur et à mesure des dépôts de couches successives provoque finalement une déviation on négligeable de profil du niveau de chargement que l'on vise à obtenir.

Il a été constaté que l'origine de ce désaxement du courant d'écoulement était à rechercher dans les différences de courbures des calottes des deux registres étant donné que l'un d'eux doit forcément avoir un rayon supérieur à l'autre. Ce phénomène de désaxement sera d'ailleurs décrit plus en détail par la suite en référence aux figures.

Le but de la présente invention est de prévoir un dispositif perfectionné qui permet l'élimination de ce désaxement, quelles que soient les positions angulaires des deux registres.

Pour atteindre cet objectif, l'invention propose un dispositif du genre décrit dans le préambule qui, dans un mode de réalisation préféré, est essentiellement caractérisé en ce que ledit mécanisme et le clapet sont mobiles, en bloc, autour de l'axe de pivotement des registres. A cet effet, ledit mécanisme est monté de façon rotative dans une douille cylindrique, elle-même montée de façon rotative dans la tubulure d'écoulement.

La rotation de cette douille, qui entraîne la rotation de tout de mécanisme, est, de préférence, engendrée par un vérin hydraulique. L'invention prévoit en outre un circuit de commande comprenant un détecteur de l'angle d'ouverture des registres, un détecteur de la position réelle du vérin, un comprateur pour comparer la position réelle du vérin à une position de consigne mémorisée en fonction des positions angulaires des registres, une vanne hydraulique commandée en fonction du résultat de la comparaison effectuée par le comparateur pour actionner le vérin jusqu'à ce que la position réelle de celui-ci corresponde à la position de consigne.

Ce dispositif permet, par conséquent, de modifier automatiquement l'orientation des registres par rapport à l'axe central pour que l'écoulement soit symétrique par rapport à celui-ci. D'autres particularités et caractéristiques ressortiront de la description détaillée d'un mode de réalisation préféré, présenté ci-dessous, à titre d'illustration, en référence aux dessins annexés dans lesquels:

la figure 1 est une vue en coupe verticale à travers un clapet de dosage actionné selon l'état de la technique;

la figure 2 représente le clapet de la figure 1 en projection horizontale;

les figures 3 et 4 représentent des vues analogues à celles des figures 1 et 2 d'un clapet actionné par le mécanisme proposé par la présente invention;

la figure 5 montre une vue partiellement en coupe longitudinale du mécanisme pour actionner le clapet de dosage;

la figure 6 montre une vue latérale dans le sens axial des arbres d'entraînement des registres;

la figure 7 montre une vue analogue à celle de la figure 6 après rotation d'un angle α du mécanisme;

la figure 8 montre une vue partiellement en coupe suivant le plan de coupe VIII—VIII de la figure 6 et

la figure 9 représente un schéma synoptique de la commande du mécanisme pour actionner le clapet de dosage.

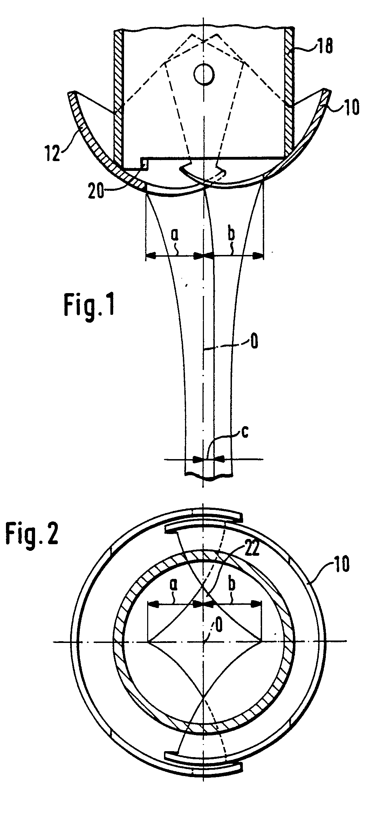

Les figures 1 et 2 montrent un clapet de dosage classique tel que proposé par le brevet européen susmentionné. Ce clapet comporte deux registres 10 et 12 en forme de calotte sphérique pouvant pivoter, en sens opposé, autour d'un axe commun en-dessous d'une tubulure d'écoulement 18. Les deux registres 10 et 12 comportent des découpes triangulaires et le mécanisme pour actionner ces registres est conçu de manière à faire pivoter les registres en sens opposé pour former une ouverture d'écoulement 22, sensiblement en forme de carreau, parfaitement symétrique par rapport à l'axe central 0, c'est-à-dire que les distances horizontales a et b du fond de chacune des découpes des registres à l'axe central 0 sont égales entre elles, quelle que soit la position angulaire des registres 10 et 12. Des essais ont montré, comme le montre la figure 1, qu'une ouverture symétrique occasionne un écoulement 10 dissymétrique dans la mesure où le courant d'écoulement est désaxé d'une distance c de l'axe central 0. Ce décalage semble provenir du fait que les registres doivent avoir des rayons de courbure différents. Dans l'exemple représenté, c'est le registre 12 qui possède le plus grand rayon de courbure, ce qui est visible au gradin 20 du bord inférieur de la tubulure 18. La courbure du registre 12 est donc moins forte que celle du registre 10. Comme le montre la figure 1, le décalage du courant d'écoulement se fait du côté opposé par rapport au registre ayant le plus grand rayon de courbure. Il semble donc que le registre à petit rayon exerce un plus grand freinage ou, inversement, que le registre, à grand rayon de courbure contribue à un écoulement plus fluide.

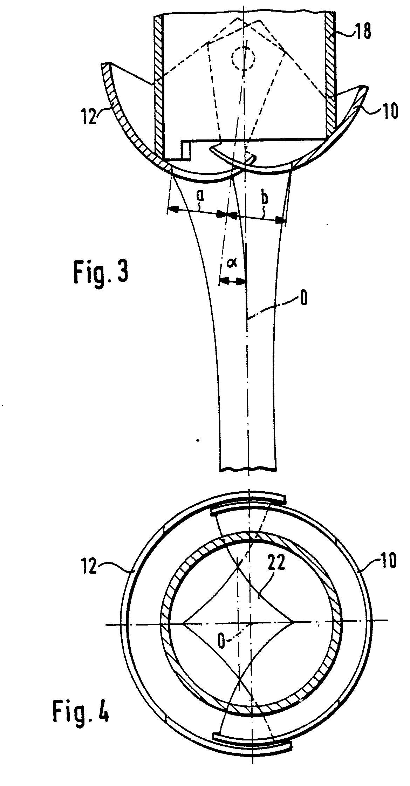

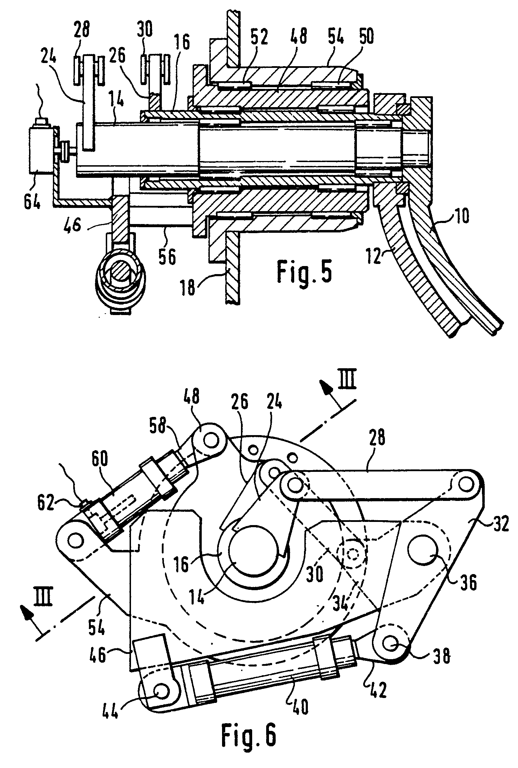

Pour éliminer ce phénomène, la présente invention propose, conformément aux figures 3 et 4, de faire pivoter les deux registres d'un angle α par rapport à l'axe 0. L'ouverture d'écoulement 22 représenté en projection sur la figure 4 devient par conséquent, asymétrique par rapport à l'axe central 0, mais le courant d'écoulement se formera symétriquement autour de cet axe comme représenté sur la figure 3.

Les moyens mis en oeuvre pour faire pivoter les deux registres 10 et 12 seront décrits en référence aux figures suivantes. Toutefois, auparavant, on va brièvement rappeler la description du mécanisme pour actionner le clapet, en référence aux figures 5 à 7, ce mécanisme étant analogue à celui préconisé par le brevet européen susmentionné et auquel on se référera pour de plus amples détails.

Le registre supérieur 10 à petit rayon est solidaire d'un arbre d'entraînement 14 disposé coaxialement à l'intérieur d'un deuxième arbre d'entraînement 16 dont le registre inférieur 12 est solidaire. Ces deux arbres 14 et 16 traversant la tubulure d'écoulement 18. Les deux arbres 14 et 16 peuvent tourner l'un par rapport à l'autre autour de leur axe commun et par rapport à la tubulure 18 grâce à l'interposition de fourreaux ou de roulements connus en soi.

Les deux arbres 14 et 16 sont respectivement solidaires de bras 24 et 26 qui sont acticulés chacun à l'une des extrémités d'une bielle 28 et 30. Les extrémités opposées de ces deux bielles 28 et 30 sont articulées, à leur tour, respectivement sur l'une des extrémités de deux leviers culbuteurs 32 et 34 montés sur un axe commun 36 parallèle à l'axe de rotation des deux arbres d'entraînement 14 et 16 et susceptibles de pivoter autour de cet axe commun 36. Ces deux leviers culbuteurs 32, 34 sont reliés ensemble, par leurs extrémités opposées, au moyens tige 38, de sorte que ces deux leviers 32 et 34 doivent forcément pivoter ensemble autour de l'axe 36. Pour augmenter la solidité, il est préférable de souder les leviers 32 et 34 l'un à l'autre au moyen d'entretoises non représentées.

Le pivotement des leviers culbuteurs 32 et 34 est engendré par un vérin hydraulique 40 qui est monté de façon pivotante sur un pivot 44 porté par une plaque de support 46. L'extrémité de la tige 42 du vérin 40 est traversée par la tige 38 qui relie les deux leviers 32 et 34.

Selon l'une des particularités de la présente invention, les deux registres 10, 12, leurs suspensions et leurs mécanismes d'entraînement sont supportés dans la tubulure 18 pour pouvoir tourner en bloc autour de l'axe longitudinal des arbres 14, 16, par rapport à la tubulure 18. A cet effet, l'arbre extérieur 16 est logé et supporté dans une douille cylindrique 48 et peut tourner par rapport à celle-ci grâce à l'interposition de fourreaux ou de roulements appropriés 50. La douille 48 peut tourner, à son tour, à l'intérieur d'un palier 54 par l'interposition de fourreaux ou roulements 52. La douille 48 est, en outre, rendue solidaire de la plaque de support 46 par une ou plusieurs entretoîses 56.

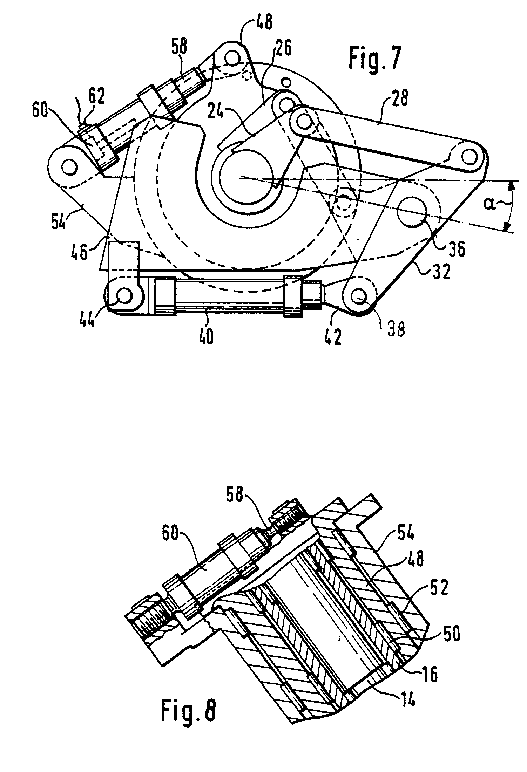

Comme représenté sur les figures 6 à 8, la douille 48 est reliée à l'extrémité de la tige de piston 58 d'un vérin 60 dont l'extrémité opposée est articulée sur le palier fixe 54. Au vérin 60 est incorporée une sonde 62, connue en soi, pour fournir des signaux représentant la position du vérin 60, c'est-à-dire l'état d'extension de la tige 58. Comme représenté sur la figure 7, un dégagement de la tige 58 du vérin 60 provoque une rotation d'un angle α de la douille 48 autour de l'axe de pivotement des registres 10 et 12 et, par suite de la fixation de la douille 48 à la plaque de support 46 une rotation correspondante des deux arbres 14 et 16 et des registres 10 et 12 autour du même axe.

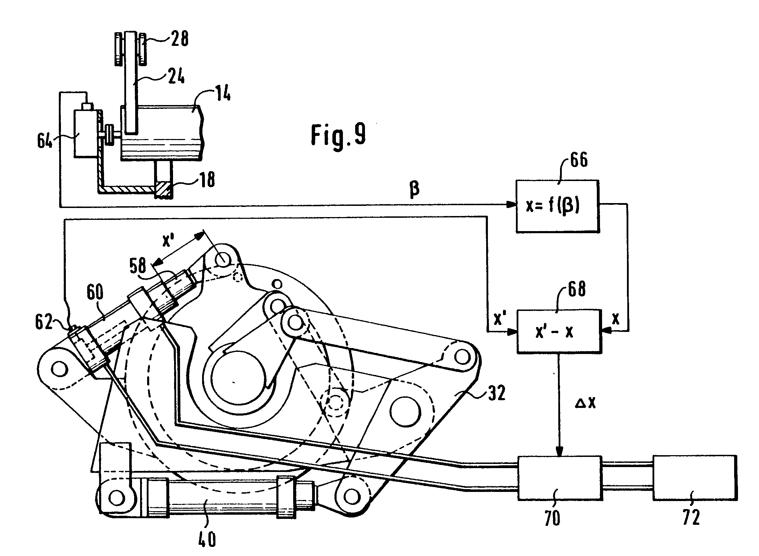

La figure 9 montre un circuit de commande pour la rotation de la douille 48 en fonction de l'ouverture angulaire des registres 10 et 12. Un détecteur de position angulaire 64 connu en soi, est associé à l'arbre 14 pour fournir en permanence la position angulaire β du registre 10 par rapport à une position de référence, par exemple sa position fermée. Ces informations sont transmises à une mémoire 66 dans laquelle on a stocké des informations de consigne pour la position angulaire optimale α de la douille 48 en fonction de la position angulaire d'ouverture β du registre 10 pour différents types de matériaux et débits. Ces informations résultent d'essais préalables et concernent la longueur d'extension X de la tige 58 du vérin 60. La mémoire 66 établit donc les valeurs de consigne X de l'amplitude d'extension de la tige 58, en fonction des positions angulaires β mesurées par le détecteur 64. Ces informations sont transmises à un comparateur 68. Celui-ci reçoit également du détecteur 62 incorporé dans le vérin 60 des informations concernant l'amplitude réelle X' de l'extension de la tige 58. Ce comparateur 68 commande une vanne hydraulique 70 qui règle le débit et le sens de circulation du fluide hydraulique entre une pompe 72 et le vérin 60.

Si le comparateur 68 détecte une différence ΔX entre la position de consigne X et la position réelle X', la vanne 70 est commandée pour faire circuler le fluide hydraulique dans le sens approprié pour réduire la difference Δ X et faire correspondre la position réelle X' à la position de consigne X. Par exemple, si la position angulaire α est trop petite, X' sera inférieur à X. Dans ce cas, la vanne 70 enverra le fluide hydraulique dans le cylindre du vérin pour sortir la tige 58 et augmenter l'amplitude de X' jusqu'à ce qu'il y ait égalité avec la valeur de consigne X.

Le dispositif représenté sur la figure 9 permet deux modes de fonctionnement différents. Il est possible de faire pivoter la douille 48 au moyen du vérin 60, les registres 10 et 12 étant fermés, jusqu'à sa position de consigne mémorisée en 66 et sans être fonction de l'angle d'ouverture β. Une fois que la position angulaire de consigne α est atteinte, l'action sur le vérin 60 est interrompue et le vérin hydraulique 40 est actionné pour déplacer les deux registres 10 et 12 en synchronisme et en sens opposé. Dans le deuxième mode d'opération, le vérin 40 est actionné dès le départ pour ouvrir les deux registres 10 et 12 en même temps. Toutefois, le vérin 60 est actionné progressivement et en fonction de l'angle β d'ouverture des registres 10, 12 suivant les valeurs de consigne mémorisées en 66. A partir de la position d'ouverture maximale du registre 12 comme représenté sur la figure 3, on peut, pour pourvoir ouvrir le registre 10 complètement, actionner le vérin 60 en sens inverse pour éviter que le registre 12 ne bute contre la tubulure 18.

L'un des avantages du dispositif préconcisé par la présente invention est qu'il est adaptable. Un autre avantage est qu'il est adaptable aux caractéristiques de différentes matières à enfourner.

Un autre avantage est celui de permettre à l'opérateur d'intervenir sur le centrage du courant d'écoulement pendant que le haut fourneau est en marche, c'est-à-dire l'opérateur peut déterminer par des appareils de mesure appropriés le degré d'uniformité de la charge déposée et intervenir en conséquence au niveau de clapet de dosage.

## Revendications

1. Dispositif de réglage de l'ouverture d'écoulement d'une tubulure verticale, comprenant un clapet de dosage constitué de deux registres rotatifs (10, 12) en forme de calotte sphérique ou cylindrique, pourvus de découpes symétriques par rapport à l'axe d'une ouverture centrale définie par le mouvement des registres (10, 12) et de leur découpe, ces registres étant solidaires de deux arbres d'entraînement (14, 16) disposés l'un coaxialement par rapport à l'autre et logés dans des paliers de la tubulure et un mécanisme pour actionner, par pivotement autour de leur axe commun, chacun des registres (10, 12) en synchronisme et en sens opposé, et comprenant deux bras (24, 26) respectivement solidaires de chacun des deux arbres (14, 16) et articulé chacun, par l'intermédiaire d'une bielle (28, 30), sur un levier culbuteur (32, 34), monté sur un axe pivotement (36) parallèle à l'axe commun des deux arbres (14, 16), ces leviers culbuteurs (32, 34) étant reliés à un dispositif d'entraînement pour les faire pivoter autour de leur axe de pivotement (36) et dans lequel l'articulation entre l'un des leviers culbuteurs (34) et sa bielle (30) est décalée angulairement autour dudit axe de pivotement (36) par rapport à l'articulation entre l'autre levier culbuteur (32) et sa bielle (28), caractérisé en ce que ledit mécanisme et le clapet sont mobiles, en bloc, autour de l'axe de pivotement des registres (10, 12).

2. Dispositif selon la revendication 1, caractérisé en ce que ledit mécanisme est monté de façon rotative dans une douille cylindrique (48), elle-même montée de façon rotative dans un palier (54) fixé à la tubulure d'écoulement (18).

3. Dispositif selon la revendication 2, caractérisée en ce que ladite douille (48) est soumise à l'action d'un vérin hydraulique (60).

4. Dispositif selon la revendication 3, caractérisé par un circuit de commande comprenant un détecteur (64) de l'angle d'ouverture β des reigstres (10, 11), un détecteur (62) de la position réelle du vérin (60), un comparateur (68) pour comparer la position réelle du vérin (60) à une position de consigne mémorisée en fonction des positions angulaires des registres (10, 12) fournies par la détecteur (64), une vanne hydraulique (70) commandée en fonction du résultat de la comparaison effectuée par le comparateur (68) pour actionner le vérin (60) jusqu'à ce que la position réelle de celui-ci corresponde à la position de consigne.

## Patentansprüche

1. Vorrichtung zum Einstellen der Ausflussöffnung eines eine Dosierklappe begriefenden vertikalen Rohrstutzens, wobei die Dosierklappe von zwei rotierenden Registern (10, 12) gebildet ist, welche die Form von kugeligen oder zylindrischen Kalotten aufweisen, welche mit Ausschnitten versehen sind die symmetrisch zu der Achse einer zentralen, durch die Bewegung der Register (10, 12) und ihrer Ausschnitte definierten Öffnung sind und welche mit zwei Antriebswellen (14, 16) verbunden sind, wovon eine koaxial zu der anderen angeordnet ist und wo beide in Lagern des Auslaufrohrstutzens ungergebracht sind, wobei ein Mechanismus ein jedes der beiden Register (10, 12) durch Schwenken um ihre gemeinsame Achse betätigt, dies synchron und in entgegengesetzter Richtung, und wobei der Mechanismus zwei Gelenkarme (24, 26) begreift wovon einerseits jeder mit einer der beiden Antriebswellen (14, 16) verbunden ist und anderseits jeder für sich über Zwischenglieder (28, 30) an Kipphebeln (32, 34) angelenkt ist, welche auf einer zu der gemeinsamen Achse der beiden Antriebswellen (14, 16) parallelen Schwenkachse (36) angebracht sind und welche mit einer Antriebsvorrichtung verbunden sind, sodass die Kipphebel (32, 34) um ihre Schwenkachse (36) gedreht werden können, dabei ist das Schwenkgelenk zwischen einem der Kipphebel (34) und seinem Zwischenglied (30) winklig um die besagte Schwenkachse (36) versetzt im Vergleich zu dem Schwenkgelenk zwischen dem anderen Kipphebel (32) und seinem Zwischenglied (28), dadurch gekennzeichnet, dass der besagte Mechanismus und die Klappe zusammenhängend um die Schwenkachse der Register (10, 12) beweglich sind.

2. Vorrichtung gemäss dem Anspruch 1, dadurch gekennzeichnet, dass der Mechanismus drehbar in einer zylindrischen Buchse (48) gelagert ist, welche ihrerseits drehbar in dem an dem Ausflussrohrstutzen (18) befestigten Lager (54) eingelassen ist.

3. Vorrichtung gemäss dem Anspruch 2, dadurch gekennzeichnet, dass die besagte Buchse (48) der Wirkung eines hydraulischen Zylinders (60) ausgesetzt ist.

4. Vorrichtung gemäss dem Anspruch 3, gekennzeichnet durch einen Steuerungskreis begreifend einen den Öffnungswinkel β der Register (10, 12) messenden Detektor (64), einen die wirkliche Stellung des Zylinders (60) erfassenden Detektor (62), einen Vergleicher (68) zur Gegenüberstellung der wirklichen Stellung des Zylinders (60) mit einer Vorgabestellung, welche in Funktion der von dem Detektor (64) gelieferten Winkelstellungen der Register (10, 12) gespeichert ist, einen hydraulischen Zylinder (70), welcher in Funktion des von dem Vergleicher (68) durchgeführten Vergleichsresultates gesteuert wird und den Zylinder (60) betätigt, bis seine wirkliche Stellung der Vorgabestellung entspricht.

## Claims

1. Device for regulating the flow opening of a vertical tube comprising a metering valve consisting of two rotary registers (10, 12) shaped as spherical or cylindrical domes and provided with cutouts which are symmetrical in relation to the axis of a central opening defined by the movement of the registers (10, 12) and of their cutouts, said registers being fastened to two drive shafts (14, 16) disposed coaxially in relation to one another and received in the bearings of the tube and a mechanism to operate by pivoting about their common axis each of the registers (10, 12) synchronously and in opposite directions and comprising two arms fastened respectively to the two shafts (14, 16) and articulated by means of a connecting rod on a rocking lever (32, 34) mounted on a pivot axis parallel to the common axis of the two shafts (14, 16), said rocking levers (32, 34) being connected to a drive device pivoting them about their pivot axis, and in which the articulation between one of the rocking levers and its connecting rod is angularly offset about said pivot axis (36) in relation to the articulation between the other rocking lever (32) and its connecting rod (28) characterized in that the mechanism and the valve are movable as a whole about the pivot axis of the registers (10, 12).

2. Device according to claim 1, characterized in that the entire mechanism, is mounted for rotation in a cylindrical sleeve (48), which in turn is mounted for rotation in a bearing (54) fixed to the flow tube (18).

3. Device according to claim 2, characterized in that said sleeve (48) is acted on by a hydraulic ram (60).

4. Device according to claim 3, characterized by a control circuit comprising a detector (64) for the angle of opening β of the registers (10, 12), a detector (62) for the actual position of the ram (60), a comparator (68) comparing the actual position of the ram (60) with a stored set position in dependence on the angular positions of the registers (10, 12) indicated by the detector (64), a hydraulic valve (70) controlled in dependence on the result of the comparison made by the comparator (68) to operate the ram (60) until the actual position of the latter corresponds to the set position.

Fig.1

Fig.2

Fig. 3

Fig. 4

Fig. 5

Fig. 6

Fig. 7

Fig. 8

Fig.9